(19) Europäisches Patentamt / European Patent Office / Office européen des brevets

(11) **EP 4 433 526 B1**

(12) **EUROPEAN PATENT SPECIFICATION**

(45) Date of publication and mention
of the grant of the patent:
**08.10.2025  Bulletin 2025/41**

(21) Application number: **23802340.2**

(22) Date of filing: **25.10.2023**

(51) International Patent Classification (IPC):
**C08J 3/12** *(2006.01)*        **C08J 3/24** *(2006.01)*
**C08K 5/14** *(2006.01)*        **H01B 3/44** *(2006.01)*

(52) Cooperative Patent Classification (CPC):
(C-Sets available)
**C08J 3/241; C08J 3/126; C08K 5/14;**
C08J 2323/04; H01B 3/441          (Cont.)

(86) International application number:
**PCT/JP2023/038461**

(87) International publication number:
**WO 2024/095852 (10.05.2024 Gazette 2024/19)**

(54) **PELLET**

PELLET

PASTILLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **02.11.2022   PCT/JP2022/041042**

(43) Date of publication of application:
**25.09.2024   Bulletin 2024/39**

(73) Proprietor: **SUMITOMO ELECTRIC INDUSTRIES,
LTD.
Osaka-shi, Osaka 541-0041 (JP)**

(72) Inventors:
• **HOSOMIZU Kohei
Osaka-shi, Osaka 541-0041 (JP)**
• **YAMANA Takeshi
Osaka-shi, Osaka 541-0041 (JP)**
• **IZUMI Naoki
Osaka-shi, Osaka 541-0041 (JP)**
• **YAMAZAKI Takanori
Osaka-shi, Osaka 541-0041 (JP)**
• **YAMASAKI Satoshi
Osaka-shi, Osaka 541-0041 (JP)**

(74) Representative: **Grünecker Patent- und
Rechtsanwälte
PartG mbB
Leopoldstraße 4
80802 München (DE)**

(56) References cited:
**WO-A1-2014/051954     US-A1- 2008 207 843**

(52) Cooperative Patent Classification (CPC): (Cont.)

C-Sets
**C08K 5/14, C08L 23/04**

**Description**

[Technical Field]

The present disclosure relates to a pellet.

[Background Art]

Cross-linked polyethylene is widely used for an insulation layer of a power cable (e.g., PTL. 1).

The insulation layer is formed using a pellet including a resin composition which includes polyethylene and a cross-linking agent.

[Citation List]

[Patent Literature]

PTL. 1: Japanese Patent Laid-Open Publication No. 2020-132817
PTL. 2: International Patent Application WO 2014/051954 A1
PTL. 3: US Patent Application US 2008/207843 A1

[Summary of Invention]

[Solution to Problem]

According to an aspect of the present disclosure,

there is provided a pellet including a resin component containing polyethylene, and a cross-linking agent, the pellet including a central portion and an outer circumferential portion located on an outer circumference of the central portion,
wherein a content of the cross-linking agent in the outer circumferential portion is less than a content of the cross-linking agent in the central portion.

[Brief Description of Drawings]

[FIG. 1]

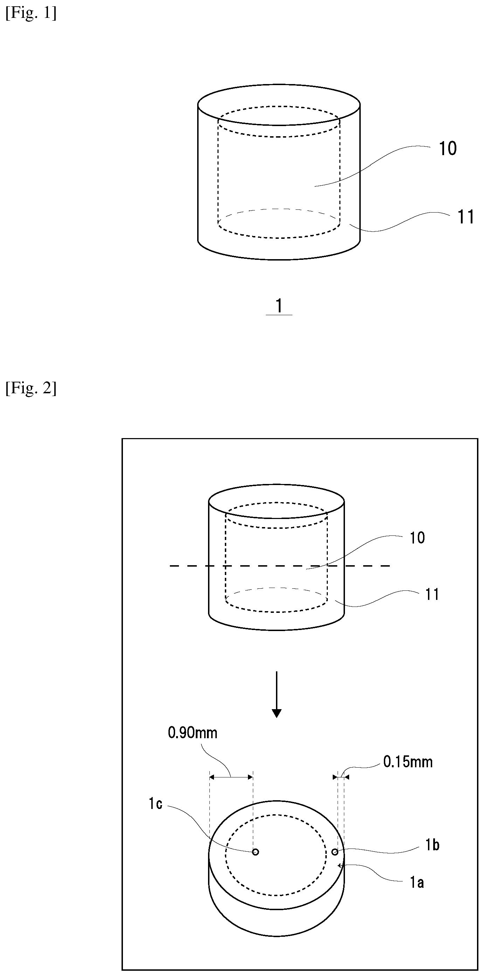

FIG. 1 is a schematic configuration diagram of a pellet according to an embodiment of the present disclosure.
[FIG. 2]
FIG. 2 is a diagram for explaining an evaluation method in the accelerated degradation test of the pellet.
[FIG. 3]

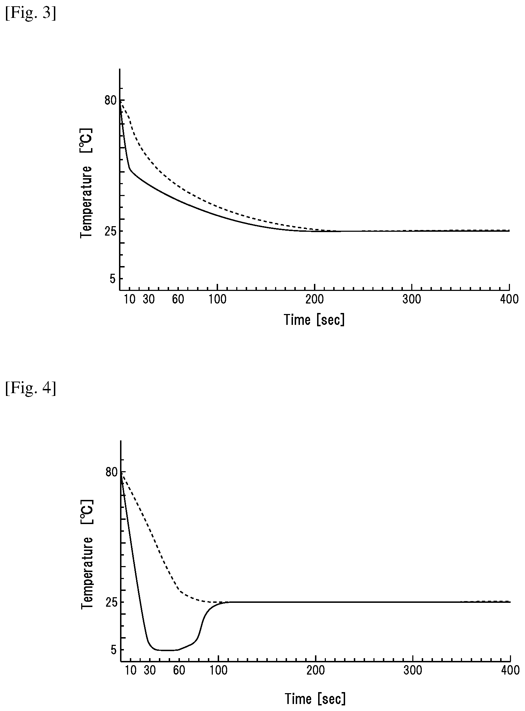

FIG. 3 is a diagram illustrating the expected temperature change in the outer circumferential portion and the central portion during cooling of Sample 16.
[FIG. 4]
FIG. 4 is a diagram illustrating the expected temperature change in the outer circumferential portion and the central portion during cooling of Sample 18.
[FIG. 5]

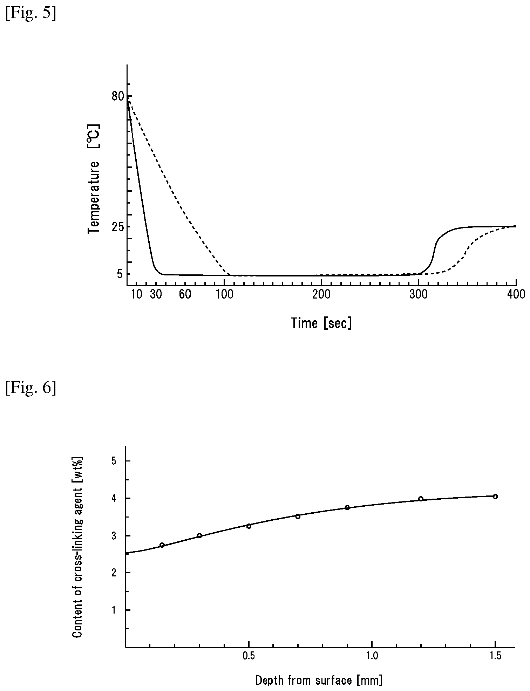

FIG. 5 is a diagram illustrating the expected temperature change in the outer circumferential portion and the central portion during cooling of Sample 20.
[FIG. 6]
FIG. 6 is a diagram illustrating the change in a content of a cross-linking agent in the depth direction for a pellet of Sample 17.

[Description of Embodiments]

**EP 4 433 526 B1**

(Problem to be Solved by Disclosure)

A power cable has an electrical insulation layer. Hereinafter, the electrical insulation layer will be referred to as an "insulation layer". The insulation layer is formed from a pellet including an insulation resin and a cross-linking agent. The insulation resin is, for example, polyethylene. The pellet is produced and stored before the power cable is produced. When the pellet is stored for a long term, the pellet is exposed to air for a long term. When the pellet is exposed to air for a long term, the insulation resin is partially cross-linked by the cross-linking agent included in the surface layer of the pellet to form a cross-linked contaminant. Hereafter, such a cross-linked contaminant is referred to simply as a contaminant. Moreover, the pellet is heated during the production of the insulation layer of the power cable. When the pellet is heated, the insulation resin included in the pellet is cross-linked by the cross-linking agent. Accordingly, the power cable has a cross-linked insulation layer. However, when a cross-linked insulation layer is formed from a pellet containing a contaminant, the cross-linked insulation layer contains the contaminant. The inventors have found that the contaminant causes a reduction in the electrical insulation of the insulation layer when the pellet is stored for a long term.

An object of the present disclosure is to provide an improvement for a pellet including an insulation resin and a cross-linking agent. Particularly, an object of the present disclosure it to provide a pellet which can be stored for a long term.

(Advantageous Effect of Disclosure)

According to the present disclosure, deterioration due to contact with air for a long term can be suppressed for the pellet including the insulation resin and the cross-linking agent.

(Embodiments of Disclosure)

Next, embodiments of the present disclosure will be listed and described.

According to an aspect of the present disclosure,

there is provided a pellet including a resin component containing polyethylene, and a cross-linking agent, the pellet including a central portion and an outer circumferential portion located on an outer circumference of the central portion,

wherein a content of the cross-linking agent in the outer circumferential portion is less than a content of the cross-linking agent in the central portion.

This configuration can suppress deterioration of the pellet due to contact with air and improve the long-term preservability of the pellet.

In the pellet according to an aspect of the present disclosure,

the content of the cross-linking agent in the outer circumferential portion is less than 10 wt% with respect to the resin component constituting the outer circumferential portion being 100 wt%.

This configuration can keep the long-term preservability of the pellet higher.

In the pellet according to the present disclosure,

$B/A \leqq 0.9$, where A indicates the content of the cross-linking agent in the central portion, and B indicates the content of the cross-linking agent in the outer circumferential portion.

This configuration can keep the long-term preservability of the pellet higher.

In the pellet according to an aspect of the present disclosure,

the content of the cross-linking agent in the central portion is 1 wt% or more and 10 wt% or less with respect to the resin component constituting the central portion being 100 wt%.

This configuration allows the content of the cross-linking agent to be adjusted across the pellet.

In the pellet according to an aspect of the present disclosure,

the content of the cross-linking agent included in the pellet is 1 wt% or more and 10 wt% or less with respect to the resin component constituting the pellet being 100 wt%.

This configuration can realize a predetermined degree of cross-linking upon cross-linking while keeping a long-term preservability of the pellet higher.

In the pellet according to an aspect of the present disclosure,

a thickness of the outer circumferential portion is 0.1 mm or more and 1 mm or less.

This configuration can keep the long-term preservability of the pellet higher.

In the pellet according to the present disclosure,

the content of the cross-linking agent in each of the central portion and the outer circumferential portion is calculated by cutting the pellet and measuring a cut surface by FT-IR or Raman scattering method.

This configuration can keep the long-term preservability of the pellet higher.

(Details of Embodiment of Disclosure)

Next, an embodiment of the present disclosure will be described below. The present disclosure is not limited to these exemplifications, but intended to be indicated by claims and encompass all the changes which fall within the meaning and scope of the claims. Further, "wt%" indicates "% by mass".

(Embodiment 1)

FIG. 1 illustrates the pellet 1 of Embodiment 1.

The pellet 1 includes a central portion 10 and an outer circumferential portion 11.

The outer circumferential portion 11 is located outside the central portion 10.

The pellet 1 includes a resin containing polyethylene, and a cross-linking agent. The cross-linking agent is, for example, an organic peroxide. The pellet 1 also includes an additive. The additive is, for example, an inorganic filler, a cross-linking agent, an antioxidant, or a lubricant. Since the cross-linking agent and the additive are disclosed, for example, in Japanese Patent Laid-Open Publication No. 2020-132819, US2020/279672A, Japanese Patent Laid-Open Publication No. 2020-132818, US2020/273598A, Japanese Patent Laid-Open Publication No. 2020-132817, US2020/270426A, Japanese Patent Laid-Open Publication No. 2019-189842, and US2021/032434A, they are not explained here.

The outer circumferential portion 11 is formed such that the content of the cross-linking agent is less than the content of the cross-linking agent in the central portion 10. Therefore, in the outer circumferential portion 11, the cross-linking agent is less likely to react with air and the pellet is less likely to degrade. Moreover, since the central portion 10 is less likely to come into contact with air because it is covered with the outer circumferential portion 11. Therefore, in the central portion 10, the cross-linking agent is less likely to react with air, and the pellet is less likely to degrade.

The pellet 1 is produced by a coating method. The coating method includes the following steps:

· a resin preparation step,
· a first molding step, and
· a second molding step.

(Resin preparation step)

In the resin preparation step, a first composition and a second composition are firstly prepared. The first composition is for forming the central portion 10. The second composition is for forming the outer circumferential portion 11. The first composition includes polyethylene and the cross-linking agent. The second composition satisfies the following condition (a) or (b):

(a) The second composition includes polyethylene. The second composition does not include the cross-linking agent.
(b) The second composition includes polyethylene. An amount of the cross-linking agent in the second composition is less than an amount of the cross-linking agent in the first composition.

Therefore, the amount of the cross-linking agent included in the second composition is less than the amount of the cross-linking agent included in the first composition.

(First molding step)

Subsequent to the resin preparation step, a first molding step is performed. First, the first composition is heated, for example, at 80°C to produce a molten first composition. The molten first composition is extruded using an extruder to produce a linear first composition. Subsequently, the linear first composition is cut into a predetermined length. Accordingly, a granular molded resin is formed. Subsequently, the granular molded resin is allowed to cool naturally, for example, in an air at 25°C. The granular molded resin corresponds to the central portion 10.

(Second molding step)

Subsequent to the first molding step, the second molding step is performed. First, the second composition is heated, for example, at 80°C to produce a molten second composition. Subsequently, the molten second composition is provided around the central portion 10 to form an outer circumferential portion 11 around the central portion 10. The outer circumferential portion 11 may be formed, for example, by applying or spraying the molten second composition onto the central portion 10. Alternatively, the second composition may be provided a plurality of times to the central portion 10 so that the outer circumferential portion 11 has a predetermined thickness. Subsequently, the second composition is allowed to cool naturally, for example, in an air at 25°C. Accordingly, the pellet 1 of Embodiment 1 is obtained.

Thus, the pellet of Embodiment 1 has the outer circumferential portion 11 which includes the second composition around the central portion 10 including the first composition. In this pellet 1, the amount of the cross-linking agent in the outer circumferential portion 11 is less than the amount of the cross-linking agent in the central portion 10.

(Embodiment 2)

Similar to the pellet 1 of Embodiment 1, the pellet 1 of Embodiment 2 has the central portion 10 and the outer circumferential portion 11. The pellet 1 of Embodiment 2 is produced by a thermal diffusion method. The thermal diffusion method includes the following steps:

- · a resin preparation step,
- · a molding step, and
- · a cooling step.

(Resin preparation step)

First, a first composition is prepared. The first composition includes polyethylene and the cross-linking agent.

(Molding step)

Subsequent to the resin preparation step, a molding step is performed. In the molding step, the first composition is firstly heated to produce a molten first composition. For example, the first composition is heated to 80°C to produce a molten first composition. Subsequently, the molten first composition is extrusion molded to produce a linear first composition at a high temperature. Subsequently, the linear first composition at the high temperature is cut into a desired length to form the pellet 1 at the high temperature.

(Cooling step)

Subsequent to the molding step, a cooling step is performed. The cooling step includes the following substeps:

- · a primary cooling substep, and
- · a secondary cooling substep.

(Primary cooling substep)

In the primary cooling substep, a surface of the pellet 1 at the high temperature is rapidly cooled. Specifically, in the primary cooling substep, a fluid at a primary cooling temperature is supplied to the surface of the pellet 1 at the high temperature for a predetermined time to rapidly cool the surface of the pellet 1. For example, in the primary cooling substep, $CO_2$ gas at 5°C is blown to the pellet 1 at the high temperature for 30 seconds for rapid cooling. Rapid cooling generates a difference in temperature between the central portion 10 and the outer circumferential portion 11 of the pellet 1. The temperature of the fluid and the time for blowing the fluid can be adjusted as needed.

(Secondary cooling substep)

The secondary cooling substep is performed immediately after the primary cooling substep. In the secondary cooling substep, the pellet 1 is placed in an air at the secondary cooling temperature. The secondary cooling temperature is, for example, 10°C to 40°C. Accordingly, the pellet 1 is gradually cooled. When the pellet is gradually cooled, the temperature difference between the central portion 10 and the outer circumferential portion 11 of the pellet 1 is maintained for a certain period. Due to this temperature difference, the cross-linking agent thermally diffuses in the pellet 1. Specifically, the cross-linking agent diffuses from the cooled outer circumferential portion 11 to the central portion 10 at the high temperature. Accordingly, the amount of the cross-linking agent in the central portion 10 is more than the amount of the cross-linking agent in the outer circumferential portion 11.

The amount of the cross-linking agent in the central portion 10 and the outer circumferential portion 11 can be measured by FT-IR or Raman scattering method.

An outer diameter and a volume of the pellet 1 can be set, as needed.

(Summary of Embodiments)

The pellet 1, in which the content of the cross-linking agent in the outer circumferential portion 11 is less than that in the central portion 10, can suppress formation of contaminants due to long-term contact with air, and is excellent in long-term preservability. For example, when the accelerated degradation test described below is performed, less contaminant is formed. In addition, even when a sheet sample is formed using the pellet 1 after a long-term storage, less contaminant is formed.

**Examples**

Next, examples according to the present disclosure will be described. These examples are illustrative of the present disclosure, and the present disclosure is not limited by these examples.

(1) Samples 1 to 8 of pellet

Samples 1 to 8 were produced using the above-mentioned coating method. Table 1 shows the conditions for the resin preparation step, the first molding step, and the second molding step in the coating method. Samples 1 to 8 contain the following cross-linking agent:

· a cross-linking agent CA1: dicumyl peroxide (hereinafter also referred to as DCP).

[Table 1]

| | | | Sample 1 | 2 | 3 | 4 | 5 | 6 | 7 | 8 |
|---|---|---|---|---|---|---|---|---|---|---|
| Resin preparation step | First resin composition | Amount of low density polyethylene (wt%) | 100 | | | | | | | |
| | | Type of cross-linking agent | CA1 | | | | | | | |
| | | Amount of cross-linking agent per 100 wt% low density polyethylene (wt%) | 6.00 | 5.25 | 4.50 | 3.75 | 3.38 | 3.15 | 3.00 | 2.25 |
| | Second resin composition | Amount of low density polyethylene (wt%) | 100 | | | | | | | |
| | | Type of cross-linking agent | CA1 | | | | | | | |
| | | Amount of cross-linking agent per 100 wt% low density polyethylene (wt%) | 0.00 | 0.75 | 1.50 | 2.25 | 2.62 | 2.85 | 3.00 | 3.75 |
| First molding step | Production condition | Temperature of first resin composition during extrusion (°C) | 80 | | | | | | | |
| | State of central portion 10 | Shape | Cylindrical | | | | | | | |
| | | Diameter (mm) | 2.4 | | | | | | | |
| | | Length (mm) | 2.4 | | | | | | | |
| | | Volume (mm³) | 10.8 | | | | | | | |
| Second molding step | Production condition | Temperature of second resin composition during application (°C) | 80 | | | | | | | |
| | State of outer circumferential portion 11 | Method for forming outer circumferential portion 11 | Application | | | | | | | |
| | | Thickness (mm) | 0.3 | | | | | | | |
| | | Volume (mm³) | 10.3 | | | | | | | |

Samples 1 to 8 were evaluated by the accelerated degradation test and the sheet sample test described below.

(Evaluation method 1: Accelerated degradation test)

The pellets of Samples 1 to 8 were evaluated by the accelerated degradation test.

In the accelerated degradation test, each pellet was stored in a thermoregulated chamber. The storage conditions are as follows:

· temperature in thermoregulated chamber: 80°C
· atmosphere in thermoregulated chamber: air
· time for storage in thermoregulated chamber: 48 hours.

Subsequently, the pellet after being stored for a predetermined period was cut as illustrated in FIG. 2 to obtain a cut surface 1a. In the cut surface 1a, the following observation areas were observed with an optical microscope to check for contaminants. It was a single area (1b in FIG. 2) located 0.15 mm from the outer circumferential surface of the pellet that is to be observed. In this example, an amber-colored matter with a size of 0.01 mm or more was regarded as a contaminant in the observation area. A case where no contaminant was observed on the surface of the pellet was evaluated as "2A", indicating excellent long-term preservability, and a case where a contaminant was observed was evaluated as "1A", indicating poor long-term preservability.

(Evaluation method 2: Sheet sample test)

The sheet sample was produced using the pellet which had undergone the accelerated degradation test. The sheet sample was obtained by extrusion molding of the pellet, which had been molten by heating at 120°C, into a sheet having a thickness of 1 mm. Then, the sheet was held at 180°C to produce a cross-linked sheet sample. The surface of the sheet sample was observed with an optical microscope to check for contaminants. The contaminants were identified by the same criteria as those used in the accelerated degradation test. In this example, a case where no contaminant was observed on the surface of the sheet sample was evaluated as "2B", indicating acceptable, and a case where a contaminant was observed was evaluated as "1B", indicating unacceptable.

The evaluation results of Sample 1 to 8 are shown in Table 2.

[Table 2]

| | | | Sample 1 | Sample 2 | Sample 3 | Sample 4 | Sample 5 | Sample 6 | Sample 7 | Sample 8 |
|---|---|---|---|---|---|---|---|---|---|---|
| Pellet | Amount of cross-linking agent per 100 wt% low density polyethylene (wt%) | | 3 | | | | | | | |
| | Central portion 10 | Amount of low density polyethylene (wt%) | 100 | | | | | | | |
| | | Type of cross-linking agent | CA1 | | | | | | | |
| | | Amount of cross-linking agent (wt%): A | 6.00 | 5.25 | 4.50 | 3.75 | 3.38 | 3.15 | 3.00 | 2.25 |
| | Outer circumferential portion 11 | Amount of low density polyethylene (wt%) | 100 | | | | | | | |
| | | Type of cross-linking agent | CA1 | | | | | | | |
| | | Amount of cross-linking agent (wt%): B | 0.00 | 0.75 | 1.50 | 2.25 | 2.62 | 2.85 | 3.00 | 3.75 |
| | B/A | | 0.00 | 0.14 | 0.33 | 0.60 | 0.78 | 0.90 | 1.00 | 1.67 |
| Evaluation | Accelerated degradation test | | 2A | 2A | 2A | 2A | 2A | 2A | 1A | 1A |
| | Sheet sample test | | 2B | 2B | 2B | 2B | 2B | 2B | 1B | 1B |

(Samples 1 to 6)

In Samples 1 to 6, the content of the cross-linking agent in the outer circumferential portion 11 was less than that in the central portion 10, as shown in Table 2. Therefore, the outer circumferential portion 11 after the accelerated degradation test contained no contaminant. The sheet sample also contained no contaminant.

In a case where the amount of the cross-linking agent in the central portion 10 and the amount of the cross-linking agent in the outer circumferential portion 11 satisfy the following condition, the outer circumferential portion 11 after the accelerated degradation test contained no contaminant.

Condition:

$$0 \leqq B/A \leqq 0.90$$

where

A indicates the amount of the cross-linking agent in the central portion 10, and
B indicates the amount of the cross-linking agent in the outer circumferential portion 11.

(Sample 7, 8)

In Sample 7, the content of the cross-linking agent in the outer circumferential portion 11 was the same as that in the central portion 10. In Sample 8, the content of the cross-linking agent in the outer circumferential portion 11 was more than that in the central portion 10. In Samples 7, 8, the outer circumferential portion 11 after the accelerated degradation test contained contaminants. The sheet sample also contained contaminants.

(2) Samples 9 to 14 of pellet

Samples 9 to 14 were produced by the above-mentioned coating method. Table 3 shows conditions for the resin preparation step, the first molding step, and the second molding step in the coating method. Sample 9 to Sample 14 contain the following cross-linking agents:

a cross-linking agent in Sample 9, CA2: t-butyldicumyl peroxide,
a cross-linking agent in Sample 10, CA3: diet-butyl peroxide),
a cross-linking agent in Sample 11, CA4: 2,5-dimethyl-2,5-di(t-butylperoxy)hexane,
a cross-linking agent in Sample 12, CA5: 1,3-bis(t-butylperoxyisopropyl)benzene,
a cross-linking agent in Sample 13, CA6: butyl 4,4-bis[(t-butyl)peroxy]pentanoate,
and
a cross-linking agent in Sample 14, CA7:
1,1-bis(1,1-dimethylethylperoxy)cyclohexane.

[Table 3]

| | | | Sample | | | | | |
|---|---|---|---|---|---|---|---|---|
| | | | 9 | 10 | 11 | 12 | 13 | 14 |
| Resin preparation step | First resin composition | Amount of low density polyethylene (wt%) | 100 | | | | | |
| | | Type of cross-linking agent | CA2 | CA3 | CA4 | CA5 | CA6 | CA7 |
| | | Amount of cross-linking agent per 100 wt% low density polyethylene (wt%) | 3.75 | | | | | |
| | Second resin composition | Amount of low density polyethylene (wt%) | 100 | | | | | |
| | | Type of cross-linking agent | CA2 | CA3 | CA4 | CA5 | CA6 | CA7 |
| | | Amount of cross-linking agent per 100 wt% low density polyethylene (wt%) | 2.25 | | | | | |
| First molding step | Production condition | Temperature of first resin composition during extrusion (°C) | 80 | | | | | |
| | State of central portion 10 | Shape | Cylindrical | | | | | |
| | | Diameter (mm) | 2.4 | | | | | |
| | | Length (mm) | 2.4 | | | | | |
| | | Volume (mm³) | 10.8 | | | | | |
| Second molding step | Production condition | Temperature of second resin composition during application (°C) | 80 | | | | | |
| | | Method for forming outer circumferential portion 11 | Application | | | | | |
| | State of outer circumferential portion 11 | Thickness (mm) | 0.3 | | | | | |
| | | Volume (mm³) | 10.3 | | | | | |

Samples 9 to 14 were evaluated by the above-mentioned accelerated degradation test and sheet sample test. Table 4 shows the evaluation results.

[Table 4]

| | | | Sample | | | | | |
|---|---|---|---|---|---|---|---|---|
| | | | 9 | 10 | 11 | 12 | 13 | 14 |
| Pellet | Amount of cross-linking agent per 100 wt% low density polyethylene (wt%) | | 3 | | | | | |
| | Central portion 10 | Amount of low density polyethylene (wt%) | 100 | | | | | |
| | | Type of cross-linking agent | CA2 | CA3 | CA4 | CA5 | CA6 | CA7 |
| | | Amount of cross-linking agent (wt%): A | 3.75 | | | | | |
| | Outer circumferential portion 11 | Amount of low density polyethylene (wt%) | 100 | | | | | |
| | | Type of cross-linking agent | CA2 | CA3 | CA4 | CA5 | CA6 | CA7 |
| | | Amount of cross-linking agent (wt%): B | 2.25 | | | | | |
| | B/A | | 0.60 | | | | | |
| Evaluation | Accelerated degradation test | | 2A | 2A | 2A | 2A | 2A | 2A |
| | Sheet sample test | | 2B | 2B | 2B | 2B | 2B | 2B |

(Samples 9 to 14)

As shown in Table 1, in Samples 9 to 14, the content of the cross-linking agent in the outer circumferential portion 11 is less than that in the central portion 10. Therefore, the outer circumferential portion 11 after the accelerated degradation test contained no contaminant. The sheet sample also contained no contaminant.

(3) Samples 15 to 22 of pellet

Samples 15 to 22 were produced by the above-mentioned thermal diffusion method. Table 5 shows the conditions for the resin preparation step, the molding step, and the cooling step in the thermal diffusion method.

[Table 5]

| Step | Category | | Parameter | Sample | | | | | | | |
|---|---|---|---|---|---|---|---|---|---|---|---|
| | | | | 15 | 16 | 17 | 18 | 19 | 20 | 21 | 22 |
| Resin preparation step | First resin composition | | Amount of low density polyethylene (wt%) | 100 | | | | | | | |
| | | | Type of cross-linking agent | CA1 | | | | | | | |
| | | | Amount of cross-linking agent (wt%) | 3.00 | | | | | | | |
| Molding step | Production condition | | Temperature of first resin composition during extrusion (°C) | 80 | | | | | | | |
| | State of linear first resin composition at high temperature | | Shape | Cylindrical | | | | | | | |
| | | | Diameter (mm) | 3 | | | | | | | |
| | | | Length (mm) | 3 | | | | | | | |
| | | | Volume (mm³) | 21.2 | | | | | | | |
| Cooling step | Primary cooling substep | Fluid | | $CO_2$ | | | | | | | |
| | | | Temperature of fluid (degree C) | 5 | 5 | 5 | 5 | 5 | 5 | 5 | 5 |
| | | | Cooling time (second) | 5 | 10 | 30 | 60 | 120 | 300 | 600 | 1200 |
| | Secondary cooling substep | | Atmosphere | Air | | | | | | | |
| | | | Temperature of atmosphere (degree C) | 25 | | | | | | | |

Samples 15 to 22 were evaluated by the above-mentioned accelerated degradation test and sheet sample test. Table 6 shows the evaluation results of Samples 15 to 22.

In Samples 15 to 22, the content of the cross-linking agent in the central portion 10 and the outer circumferential portion 11 was measured by FT-IR. Specifically, each pellet was cut as illustrated in FIG. 2. Then, in the cut surface 1a, FT-IR measurement was performed at a position at a depth of 0.15 mm from the outer circumferential surface (1b in FIG. 2) and at a position at a depth of 0.90 mm from the outer circumferential surface (1c in FIG. 2) to obtain the content of the cross-linking agent at each position. The content at the position at the depth of 0.15 mm was taken as the content of the outer circumferential portion 11, and the content at the position at the depth of 0.90mm was taken as the content of the central portion 10.

[Table 6]

| | | | 15 | 16 | 17 | 18 | 19 | 20 | 21 | 22 |
|---|---|---|---|---|---|---|---|---|---|---|
| | | | | | | | Sample | | | |
| Pellet | Amount of cross-linking agent per 100 wt% low density polyethylene (wt%) | | | | | 3 | | | | |
| | Central portion 10 | Amount of low density polyethylene (wt%) | | | | 100 | | | | |
| | | Amount of cross-linking agent per 100 wt% low density polyethylene (wt%): A | 3.00 | 3.00 | 3.75 | 3.75 | 3.75 | 3.00 | 3.00 | 3.00 |
| | Outer circumferential portion 11 | Amount of low density polyethylene (wt%) | | | | 100 | | | | |
| | | Amount of cross-linking agent per 100 wt% low density polyethylene (wt%): B | 3.00 | 3.00 | 2.75 | 2.75 | 2.75 | 3.00 | 3.00 | 3.00 |
| | | B/A | 1.00 | 1.00 | 0.73 | 0.73 | 0.73 | 1.00 | 1.00 | 1.00 |
| Evaluation | Accelerated degradation test | | 1A | 1A | 2A | 2A | 2A | 1A | 1A | 1A |
| | Sheet sample test | | 1B | 1B | 2B | 2B | 2B | 1B | 1B | 1B |

(Sample 15, 16)

As shown in Table 6, in Samples 15 and 16, the content of the cross-linking agent in the outer circumferential portion 11 was the same as that in the central portion 10. This is probably because the temperatures in the central portion 10 and the outer circumferential portion 11 changed as illustrated in FIG. 3. FIG. 3 is a diagram illustrating the expected temperature changes in the outer circumferential portion and the central portion when cooling (primary cooling substep and secondary cooling substep) is applied to Sample 16. In the figure, a dashed line indicates the expected temperature change in the central portion 10, and a solid line indicates the expected temperature change in the outer circumferential portion 11.

Specifically, as illustrated in FIG. 3, since the primary cooling substep was short in time, the temperature in the outer circumferential portion 11 did not drop sufficiently in the primary cooling substep. Specifically, in the primary cooling substep, the temperatures in the central portion 10 and the outer circumferential portion 11 dropped sharply for 10 seconds after the start of cooling, but the temperatures both in the central portion 10 and the outer circumferential portion 11 were relatively high. In the secondary cooling substep, the temperature decreases gradually both in the central portion 10 and the outer circumferential portion 11, the temperature difference between the outer circumferential portion 11 and the central portion 10 is small, and no thermal diffusion of the cross-linking agent from the outer circumferential portion 11 into the central portion 10 is presumed to occur.

In samples 15, 16, the outer circumferential portion 11 after the accelerated degradation test contained contaminants, and the sheet sample also contained contaminants.

(Samples 17 to 19)

For Sample 17, the change in the content of the cross-linking agent was measured from the surface of the pellet toward the depth direction, and then the change illustrated in FIG. 6 was observed. FIG. 6 illustrates the content of the cross-linking agent obtained by cutting a pellet as illustrated in FIG. 2 and performing FT-IR measurement at positions at depths of 0.15 mm, 0.3 mm, 0.5 mm, 0.7 mm, 0.9 mm, 1.2 mm, and 1.5 mm from the outer circumferential surface in the cut surface 1a. As illustrated in FIG. 6, in sample 17, the content of the cross-linking agent decreased toward the surface of the pellet and increased toward the center of the pellet. It was observed that the content of the cross-linking agent changed in the depth direction in Samples 18 and 19 as well.

In Samples 17 to 19, a region where the content of the cross-linking agent is not more than the average value for the entire pellet is defined as an outer circumferential portion, and a region where the content is more than the average value is defined as a central portion. The average value for the entire pellet refers to the content of the cross-linking agent per 100 wt% of low density polyethylene forming the pellet, which is 3 wt% for the pellets 17 to 19. In Samples 17 to 19, since a region where the content of the cross-linking agent was 3 wt% or less was at 0.3 mm from the surface, the region with a thickness of 0.3 mm was defined as the outer circumferential portion, and the region with a diameter of 2.4 mm, excluding the outer circumferential portion, was defined as the central portion.

As shown in Table 6 and FIG. 6, in Samples 17 to 19, the content of the cross-linking agent at a depth of 0.15 mm from the surface of the pellet in the outer circumferential portion 11 was less than that at a depth of 0.90 mm from the surface of the pellet in the central portion 10. This is probably because the temperatures in the central portion 10 and the outer circumferential portion 11 changed as illustrated in FIG. 4. FIG. 4 is a diagram illustrating the expected temperature changes in the outer circumferential portion 11 and the central portion 10 when cooling (primary cooling substep and secondary cooling substep) is applied to Sample 18. In the figure, a dashed line indicates the expected temperature change in the central portion 10, and a solid line indicates the expected temperature change in the outer circumferential portion 11.

Specifically, as illustrated in FIG. 4, since the primary cooling substep had appropriate length of time, the temperature in the outer circumferential portion 11 dropped greatly in the primary cooling substep. Specifically, the temperature in the outer circumferential portion 11 decreased to 5°C within 60 seconds after the start of cooling in the primary cooling substep. On the other hand, the temperature in the central portion 10 did not drop as much as the outer circumferential portion 11 did, and the temperature difference between the outer circumferential portion 11 and the central portion 10 was large. Due to a large temperature difference between the outer circumferential portion 11 and the central portion 10, thermal diffusion of the cross-linking agent from the outer circumferential portion 11 to the central portion 10 is presumed to occur in the primary cooling substep.

In Samples 17 to 19, the outer circumferential portion 11 after the accelerated degradation test contained no contaminant. The sheet sample also contained no contaminant.

(Samples 20 to 22)

In Samples 20 to 22, the content of the cross-linking agent in the outer circumferential portion 11 was the same as that in the central portion 10, as shown in Table 6. This is probably because the temperatures in the central portion 10 and the outer circumferential portion 11 changed as illustrated in FIG. 5. FIG. 5 is a diagram illustrating the expected temperature changes in the outer circumferential portion and the central portion when cooling (primary cooling substep and secondary cooling substep) is applied to Sample 20. In the figure, a dashed line indicates the expected temperature change in the central portion 10, and a solid line indicates the expected temperature change in the outer circumferential portion 11.

Specifically, in the primary cooling substep, the temperature in the central portion 10 and the outer circumferential portion 11 decreased to 5°C within 300 seconds after the start of cooling, as illustrated in FIG. 5. In this event, the temperature in the central portion 10 decreased more slowly than that in the outer circumferential portion 11: the temperature in the outer circumferential portion 11 reached 5°C, and, after some time had elapsed, the temperature in the central portion 10 also reached 5°C. Therefore, there was a period in which the temperature difference between the outer circumferential portion 11 and the central portion 10 became large, causing thermal diffusion of the cross-linking agent from the outer circumferential portion 11 to the central portion 10. On the other hand, in the secondary cooling substep, the temperature in the outer circumferential portion 11 rose from 5°C to 25°C, and, after some time had elapsed, the temperature in the central portion 10 also rose to 25°C. During this process, the temperature in the outer circumferential portion 11 becomes higher than the temperature in the central portion 10, generating a predetermined temperature difference. Accordingly, thermal diffusion of the cross-linking agent occurs from the central portion 10 toward the outer circumferential portion 11. Consequently, during the cooling step per se, no thermal diffusion of the cross-linking agent is presumed to occur.

In Samples 20 to 22, the outer circumferential portion 11 after the accelerated degradation test contained contaminants. The sheet sample also contained contaminants.

As described above, the pellet disclosed herein is a pellet including a resin component containing polyethylene, and a cross-linking agent, the pellet including a central portion and an outer circumferential portion located on an outer circumference of the central portion, wherein a content of the cross-linking agent in the outer circumferential portion is less than a content of the cross-linking agent in the central portion.

Thus, the pellet is less likely to deteriorate even when stored for a long term. The power cable produced using the pellet has a good electrical insulation. Since the method for producing the power cable is disclosed, for example, in Japanese Patent Laid-Open Publication No. 2020-132817 and US2020/0270426, it is not explained here.

The content of the cross-linking agent in the outer circumferential portion 11 is not restricted to 2.85 wt% disclosed in Sample 6. It will be understood that the pellet in which the content of the cross-linking agent in the outer circumferential portion 11 is less than that in the central portion 10 is less likely to deteriorate upon a long-term storage, compared to the pellet in which the amount of the cross-linking agent in the outer circumferential portion 11 is the same as that in the central portion 10.

However, in the outer circumferential portion 11 containing a large amount of the cross-linking agent, the pellet 1 may deteriorate in a short period even when the content of the cross-linking agent in the outer circumferential portion 11 is less than that in the central portion 10. Accordingly, the content of the cross-linking agent in the outer circumferential portion 11 is desirably 0 wt% or more and less than 10 wt%, or 9 wt% or less, with respect to the resin component constituting the outer circumferential portion 11 being 100 wt%.

In order to sufficiently cross-link the resin component, the content of the cross-linking agent in the central portion 10 may be 1 wt% or more with respect to the resin component constituting the central portion being 100 wt%. In order to prevent the resin component after cross-linking from containing a large amount of by-products of the cross-linking, the content of the cross-linking agent in the central portion 10 may be 1 wt% or more and 10 wt% or less with respect to the resin component constituting the central portion being 100 wt%.

In pellet 1, the ratio B/A between the content A of the cross-liking agent in the central portion and the content B of the cross-linking agent in the outer circumferential portion is not limited to the values in Examples. When pellet 1 is prepared by the coating method, each of the content A and the content B can be adjusted, and therefore the ratio B/A may be adjusted, for example, to satisfy $0 \leqq B/A \leqq 0.9$. On the other hand, when the pellet 1 is produced by the thermal diffusion method, the content A and the content B may be adjusted by thermal diffusion so that $B/A \leqq 0.9$. The ratio B/A may be adjusted, for example, to satisfy $0.6 \leqq B/A \leqq 0.9$, although the lower limit is not particularly limited.

A thickness of the outer circumferential portion 11 is not restricted to 0.3 mm disclosed in Examples. In order to prevent the central portion 10 from deteriorating, it is enough for the outer circumferential portion 11 to have a thickness of 0.1 mm or more and 1 mm or less. A size (diameter) of the central portion 10 is not restricted to 2.4 mm disclosed in Examples. The diameter of the central portion 10 is preferably 1.8 mm or more and 6.0 mm or less. The diameter of the pellet 1 is not restricted to 3 mm disclosed in Examples. The diameter of the pellet 1 is preferably 2.0 mm or more and 8.0 mm or less.

For the contents of the cross-linking agent in the outer circumferential portion and the central portion in the pellet produced by the thermal diffusion method, positions at depths of 0.15 mm and 0.9 mm from the surface of the pellet were respectively selected, but not limited thereto, in Examples. As the measurement position of the outer circumferential portion, the middle of the thickness of the outer circumferential portion may be selected. As the measurement position of the central portion, the middle between the surface of the central portion and the center may be selected.

Reference Signs List

1  Pellet
10  Central portion
11  Outer circumferential portion

**Claims**

**1.  A pellet** including a resin component containing polyethylene, and a cross-linking agent, the pellet comprising:

a central portion and

an outer circumferential portion located on an outer circumference of the central portion,

wherein the outer circumferential portion is a region where the content of the crosslinking agent is not more than an average value of the content of the crosslinking agent in the entire pellet, and the central portion is a region where the content of the crosslinking agent exceeds the average value, and

the following ratio holds: $0 \leqq B/A \leqq 0.9$, where A is the content of the crosslinking agent in the central portion and B is the content of the crosslinking agent in the outer circumferential portion, and the content of the crosslinking agent in each of the central portion and the outer circumferential portion is calculated by measuring a cut surface obtained by cutting the pellet by FT-IR or Raman scattering method.

2. The pellet according to Claim 1,
wherein the content of the cross-linking agent in the outer circumferential portion is less than 10 wt% with respect to the resin component constituting the outer circumferential portion being 100 wt%.

3. The pellet according to Claim 1 or Claim 2, wherein the content of the cross-linking agent in the central portion is 1 wt% or more and 10 wt% or less with respect to the resin component constituting the central portion being 100 wt%.

4. The pellet according to any one of Claim 1 to Claim 3, wherein the content of the cross-linking agent included in the pellet is 1 wt% or more and 10 wt% or less with respect to the resin component constituting the pellet being 100 wt%.

5. The pellet according to any one of Claim 1 to Claim 4, wherein a thickness of the outer circumferential portion is 0.1 mm or more and 1 mm or less.

**Patentansprüche**

1. **Ein Pellet,** das eine Harzkomponente, die Polyethylen enthält, und ein Vernetzungsmittel aufweist, wobei das Pellet Folgendes aufweist:

   einen zentralen Abschnitt und
   einen äußeren umlaufenden Abschnitt, der sich an einem äußeren Umfang des zentralen Abschnitts befindet, wobei der äußere Umfangsabschnitt ein Bereich ist, in dem der Gehalt des Vernetzungsmittels nicht mehr als ein Durchschnittswert des Gehalts des Vernetzungsmittels in dem gesamten Pellet ist, und der zentrale Abschnitt ein Bereich ist, in dem der Gehalt des Vernetzungsmittels den Durchschnittswert übersteigt, und
   das folgende Verhältnis gilt: $0 \leqq B/A \leqq 0,9$, wobei A der Gehalt des Vernetzungsmittels im zentralen Abschnitt und B der Gehalt des Vernetzungsmittels im äußeren Umfangsabschnitt ist, und der Gehalt des Vernetzungsmittels sowohl im zentralen Abschnitt als auch im äußeren Umfangsabschnitt durch Messung einer durch Schneiden des Pellets erhaltenen Schnittfläche mittels FT-IR- oder Raman-Streuungsmethode berechnet wird.

2. Das Pellet nach Anspruch 1,
wobei der Gehalt des Vernetzungsmittels in dem äußeren umlaufenden Abschnitt weniger als 10 Gew.-% beträgt, bezogen auf die Harzkomponente, die den äußeren umlaufenden Abschnitt bildet und 100 Gew.-% beträgt.

3. Das Pellet nach Anspruch 1 oder Anspruch 2, wobei der Gehalt des Vernetzungsmittels im zentralen Abschnitt 1 Gew.-% oder mehr und 10 Gew.-% oder weniger beträgt, bezogen auf die den zentralen Abschnitt bildende Harzkomponente, die 100 Gew.-% beträgt.

4. Das Pellet nach einem der Ansprüche 1 bis 3, wobei der Gehalt des im Pellet enthaltenen Vernetzungsmittels 1 Gew.-% oder mehr und 10 Gew.-% oder weniger, bezogen auf die das Pellet bildende Harzkomponente, 100 Gew.-% beträgt.

5. Das Pellet nach einem der Ansprüche 1 bis 4, wobei die Dicke des äußeren umlaufenden Abschnitts 0,1 mm oder mehr und 1 mm oder weniger beträgt.

**Revendications**

1. Granulé incluant un composant de résine contenant du polyéthylène et un agent de réticulation, le granulé comprenant :

une portion centrale, et
une portion circonférentielle externe située sur une circonférence externe de la portion centrale,
dans lequel la portion circonférentielle externe est une région où la teneur en agent de réticulation n'est pas supérieure à une valeur moyenne de la teneur en agent de réticulation dans le granulé entier, et la portion centrale est une région où la teneur en agent de réticulation dépasse la valeur moyenne, et
le ratio suivant est respecté : $0 \leq B/A \leq 0.9$, où A est la teneur en agent de réticulation dans la portion centrale et B est la teneur en agent de réticulation dans la portion circonférentielle externe, et la teneur en agent de réticulation dans chaque portion parmi la portion centrale et la portion circonférentielle externe est calculée en mesurant une surface de coupe obtenue en découpant le granulé selon un procédé par spectroscopie infrarouge à transformée de Fourier, IRTF, ou par diffusion Raman.

2.  Granulé selon la revendication 1,
    dans lequel la teneur en agent de réticulation dans la portion circonférentielle externe est inférieure à 10 % en masse par rapport au composant de résine constituant la portion circonférentielle externe, qui est de 100 % en masse.

3.  Granulé selon la revendication 1 ou 2, dans lequel la teneur en agent de réticulation dans la portion centrale est de 1 % en masse ou plus et de 10 % en masse ou moins par rapport au composant de résine constituant la portion centrale, qui est de 100 % en masse.

4.  Granulé selon l'une quelconque des revendications 1 à 3, dans lequel la teneur en agent de réticulation inclus dans le granulé est de 1 % en masse ou plus et de 10 % en masse ou moins par rapport au composant de résine constituant le granulé, qui est de 100 % en masse.

5.  Granulé selon l'une quelconque des revendications 1 à 4, dans lequel l'épaisseur de la portion circonférentielle externe est de 0,1 mm ou plus et de 1 mm ou moins.

[Fig. 1]

1

[Fig. 2]

[Fig. 3]

[Fig. 4]

[Fig. 5]

[Fig. 6]

## EP 4 433 526 B1

**Patent documents cited in the description**

- JP 2020132817 A
- WO 2014051954 A1
- US 2008207843 A1
- JP 2020132819 A
- US 2020279672 A
- JP 2020132818 A
- US 2020273598 A
- US 2020270426 A
- JP 2019189842 A
- US 2021032434 A
- US 20200270426 A